# FASCICULE DE BREVET EUROPEEN

(11) **EP 4 448 387 B1**
(45) Date de publication et mention de la délivrance du brevet: **18.11.2026**
(21) Numéro de dépôt: 22847555.4
(22) Date de dépôt: 15.12.2022
(51) Int. Cl.: B64D 15/04, B64D 33/02, F02C 7/045, F02C 7/047

(54) **LEVRE D'ENTREE D'AIR POUR UNE NACELLE D'UN ENSEMBLE PROPULSIF D'AERONEF**
INLET FOR A NACELLE OF AN ENGINE OF AN AIRCRAFT
TRIEBWERKSEINLAUF FÜR EINE TRIEBWERKSGONDEL EINES FLUGZEUGS

(30) Priorité: 17.12.2021 FR 2113772
(43) Date de publication de la demande: 23.10.2024
(73) Titulaire: Safran Nacelles, 76700 Gonfreville-l'Orcher (FR)
(72) Inventeur: DIGEOS, Virginie Emmanuelle Anne-Marie, 77550 MOISSY-CRAMAYEL (FR); COAT-LENZOTTI, Caroline, 77550 MOISSY-CRAMAYEL (FR); LE DOCTE, Thierry Jacques Albert, 77550 MOISSY-CRAMAYEL (FR)
(74) Mandataire: Gevers & Orès
(86) Numéro de dépôt international: PCT/FR2022/052378
(87) Numéro de publication internationale: WO 2023/111469

(56) Documents cités:
- WO-A1-2021/192599
- CN-A- 113 562 182
- FR-A1- 2 935 356
- US-A1- 2008 179 448
- US-A1- 2018 215 476
- US-A1- 2020 140 097
- VOGEL TORSTEN: "Forscher steigern Wärmeleitfähigkeit von Graphen um 58%", 15 December 2012 (2012-12-15), pages 1 - 3, XP093032878, Retrieved from the Internet <URL:https://www.pcgameshardware.de/Neue-Technologien-Thema-71240/News/Forscher-steigern-Waermeleitfaehigkeit-von-Graphen-um-58Prozent-863650/> [retrieved on 20230320]

## Description

### Domaine technique de l'invention

L'invention se rapporte au domaine des ensembles propulsifs, par exemple d'aéronef, et plus particulièrement, à une lèvre d'entrée d'air pour une nacelle d'un tel ensemble propulsif.

### Arrière-plan technique

L'état de la technique peut comprendre notamment les documents WO-A1-2021/192599, US-A1-2018/215476, CN-A-113562182, US-A1-2020/140097, US-A1-2018/178917, US-A1-2011/011056, US-A1-2015/210400, US-A1-2008/179448, FR-A1-2935356 et US-A1-2016/305321.

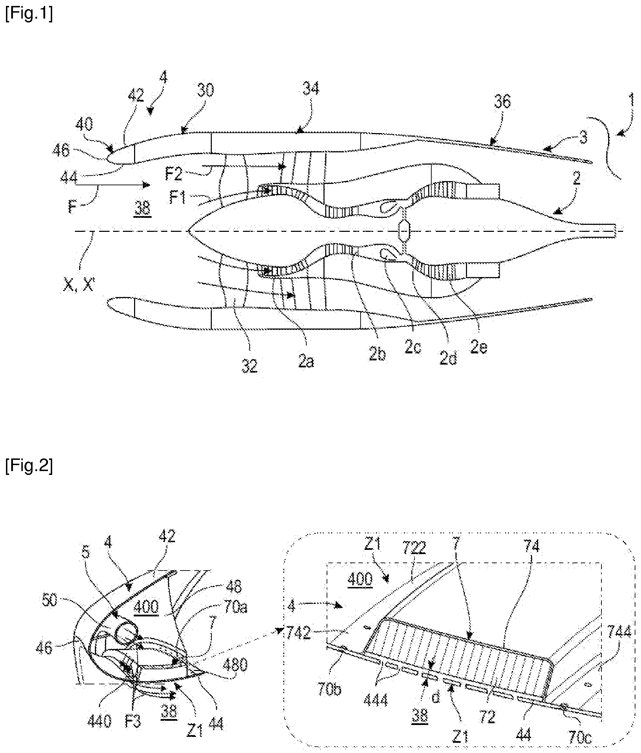

Un ensemble propulsif 1, en particulier d'un aéronef, comprend un moteur du type turbomachine 2 qui est entouré par une nacelle 3 (figure 1). Dans le cas où la turbomachine 2 est un turboréacteur à double flux, le flux d'air qui passe dans une manche d'entrée d'air 4 traverse un aubage d'une soufflante 32 puis se divise en un flux d'air primaire F1 qui pénètre dans une partie chaude de la turbomachine 2 et en un flux d'air secondaire F2 qui s'écoule dans une partie froide de la turbomachine 2.

La nacelle 3 comprend la manche d'entrée d'air 4, une structure médiane 34 et une structure aval 36 toutes reliées entre elles de manière à former une veine d'écoulement d'un flux d'air 38. Cette veine 38 forme une entrée d'un flux d'air F à l'intérieur de la nacelle 3. Après passage du flux d'entrée d'air F dans la soufflante 32, il se divise en flux primaire F1 et flux secondaire F2 dans la turbomachine 2.

La manche d'entrée 4 comprend une lèvre d'entrée d'air 40 agencée pour permettre la captation optimale de l'air nécessaire à l'alimentation du moteur, et ce, sur l'ensemble de sa plage de fonctionnement, tout en minimisant pertes et trainée.

De manière classique, la lèvre est annulaire et comprend une paroi annulaire interne 44, une paroi annulaire externe 42 et une paroi annulaire amont 46 reliant les parois interne et externe entre elles, de façon à délimiter entre elles une cavité annulaire 400.

La lèvre d'entrée d'air est connue pour être un point de l'ensemble propulsif favorisant l'accrétion de glace ou de givre. La glace se formant sur la lèvre d'entrée peut atteindre une taille élevée avant de se décrocher, avec le risque, lorsqu'elle finit par se désolidariser de la lèvre d'entrée, d'endommager les aubes de soufflante qu'elle percute ou une autre pièce de la turbomachine qui l'ingère. L'amas de glace ou de givre peut également s'accumuler de manière inégale sur la lèvre d'entrée et entraîner ainsi des vibrations indésirables de l'ensemble propulsif.

Afin de pallier ce problème, il a été proposé d'implanter un dispositif de dégivrage (ou d'antigivrage) dont le but est de faire en sorte que la glace ou le givre sur les parois de la lèvre de la manche d'entrée soit dégagé(e) avant d'atteindre une taille critique. En référence à la figure 2, un tel dispositif de dégivrage 5 connu, présenté notamment dans le document FR-A1-3 095 420, comporte un tube circulaire 50 dans la cavité 400 de la lèvre 40 qui fait le tour de la nacelle et qui alimente en air chaud prélevé sur la turbomachine, la cavité annulaire 400 afin de réchauffer les parois de la lèvre. La circulation d'air chaud en contact avec la lèvre permet de réchauffer les parois de la lèvre pour dégivrer ou éviter au givre de se former sur la lèvre d'entrée d'air.

Par ailleurs pour réduire les émissions acoustiques de l'ensemble propulsif, on garnit certaines parois intérieures de la nacelle avec des panneaux acoustiques 7 de type sandwich. Ce panneau acoustique 7 comporte une âme centrale présentant des cellules acoustiques 72 en forme de nid d'abeilles. Les cellules acoustiques peuvent être recouvertes par une peau arrière étanche, et par une peau avant tournée vers la source sonore, qui est perforée ou poreuse. Sur la figure 2, les cellules acoustiques 72 sont situées entre une peau annulaire externe 74 et une partie de la paroi interne 44 de la lèvre qui est perforée de trous 444.

Les cellules acoustiques ouvertes constituent alors un dispositif du type résonateur de Helmholtz, qui contribue à fortement réduire les émissions acoustiques.

Ce type de panneaux acoustiques est disposé notamment sur les parois internes de la veine annulaire secondaire d'air froid, dans le cas d'un turboréacteur à double flux, ainsi que sur la paroi interne de la lèvre d'entrée d'air. Ces panneaux viennent notamment former la ou les pièce(s) acoustique(s) formant tout ou partie de la virole acoustique de l'entrée d'air, lesquels sont disposés dans la cavité annulaire de la lèvre.

Cependant, la mise en place de cellules acoustiques dans la cavité annulaire de la lèvre isole certaines zones de paroi de la lèvre (par exemple, une zone de paroi Z1 de la lèvre en regard du panneau acoustique), ce qui peut empêcher de réchauffer cette zone de paroi sur laquelle il peut y avoir un risque d'accumulation de givre.

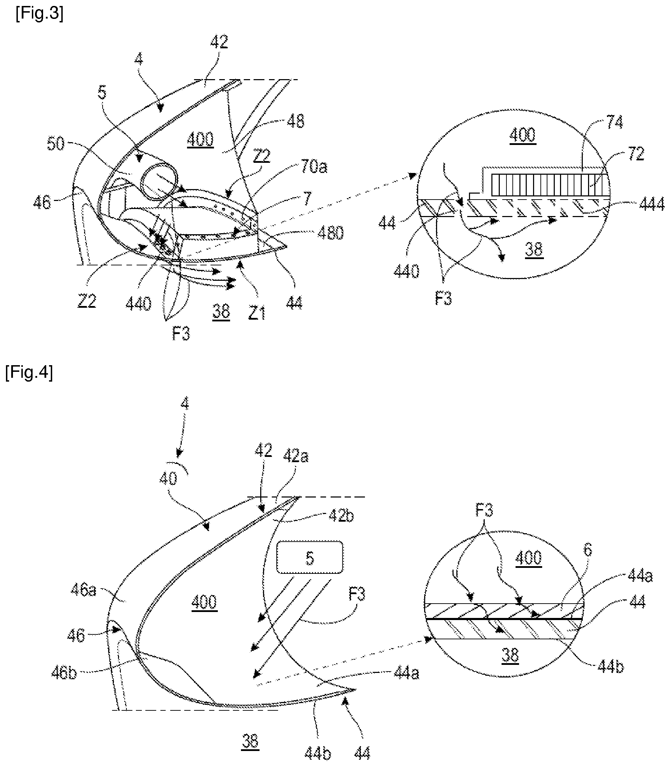

Afin de pallier ce second problème, plusieurs systèmes sont envisagés, tels que :
- le dégivrage par canaux, présenté notamment dans le document FR-A1-2 981 049, qui propose une alternance de cellules acoustiques et de canaux dans lesquels circule un fluide permettant de chauffer la zone de paroi isolée par le panneau acoustique ;
- le dégivrage « transpirant », présenté notamment dans le document FR-A1-3 023 538, qui propose une sortie (telle que des orifices 440 et/ou des trous 444 sur la paroi interne 44 de la lèvre 40) du flux d'air chaud F3 dans la veine secondaire 38 afin de réchauffer la surface de la paroi 44 par l'extérieur au-dessus de laquelle se trouvent les cellules acoustiques 72 (figures 2 et 3) ;
- le dégivrage par ventilation des cellules acoustiques, présenté notamment dans le document FR-A1-2 752 392, dans lequel les cellules acoustiques comportent chacune des trous de circulation d'air avec ou sans sortie de l'air dans la veine secondaire.

Cependant, le système de dégivrage par canaux peut présenter plusieurs inconvénients, tels que :
- la perte de l'efficacité acoustique du fait de la présence de canaux de circulation entre les cellules acoustiques,
- la difficulté d'assemblage (concordance entre les canaux, le positionnement du perçage acoustique, le passage des canaux entre les cellules, etc.), et
- la mise en place d'un système d'alimentation des canaux peut être plus encombrant et plus coûteux.

Les limites du système de dégivrage transpirant peuvent être :
- la zone acoustique est limitée entre le point de séparation du flux d'air en amont de la zone acoustique et le cadre avant, et
- le rejet d'air chaud F3 dans le flux d'air moteur (en particulier dans la veine secondaire 38 d'air froid, tel qu'illustré sur la figure 3) qui risque d'impacter le fonctionnement nominal du moteur et de ces composants. L'inconvénient du système de dégivrage par ventilation des cellules acoustiques, est que la circulation d'air dans les cellules peut ne pas être efficace sur la totalité du panneau acoustique, notamment par la présence de zones confinées.

Dans ces différents contextes, il est intéressant de proposer une solution permettant de pallier les inconvénients de l'art antérieur, notamment en améliorant la conduction thermique d'une lèvre d'entrée d'air, afin de diminuer l'énergie nécessaire pour son dégivrage.

Plus particulière dans le cas du système de dégivrage transpirant, il est intéressant de proposer une lèvre d'entrée d'air permettant notamment de limiter le rejet d'air chaud dans une veine d'écoulement secondaire (en air froid) d'une turbomachine d'un ensemble propulsif.

### Résumé de l'invention

La présente invention propose ainsi une lèvre annulaire pour une nacelle d'un ensemble propulsif d'aéronef, telle que définie dans la revendication 1.

Dans la présente demande, on entend par « revêtement de transfert thermique », un revêtement ayant pour fonction (ou capacité) d'échanger de la chaleur, en particulier cette chaleur se dirigeant d'un ou plusieurs éléments le plus chaud (par exemple, un flux d'air chaud provenant d'un dispositif de dégivrage ou anti-dégivrage) vers un ou plusieurs éléments le plus froid (par exemple, les parois de la lèvre présentant du givre) afin de réchauffer cet ou ces éléments froids. Pour cela, le revêtement est notamment réalisé dans un ou plusieurs matériaux présentant des propriétés thermiques favorisant le transfert thermique. A titre d'exemple, le revêtement selon l'invention présente des propriétés thermiques optimales lorsqu'elles sont supérieures aux propriétés thermiques de la lèvre annulaire et/ou du panneau acoustique composant la lèvre d'entrée d'air. Par exemple, les propriétés thermiques sont caractérisées par la conductivité thermique des matériaux formant le revêtement de transfert thermique, la lèvre annulaire et le panneau acoustique.

Par « carbone allotrope », on entend un matériau comportant du carbone sous ses formes allotropiques pour avoir des propriétés physiques (par exemple, conductivité thermique, point de fusion, dureté, etc.) et une réactivité chimique différentes, bien que les formes allotropiques soient constituées d'atomes identiques. A titre d'exemple, le carbone allotrope peut être suivant les deux formes suivantes les plus répandues :
- du graphène qui est un cristal bidimensionnel d'atomes de carbone répartis régulièrement sur un réseau hexagonal en forme de nid d'abeilles, et
- du diamant qui présente une forme cristalline transparente dure avec chaque atome de carbone entouré de quatre liaisons simples dans un arrangement tétraédrique.

Ainsi, le revêtement de transfert thermique réalisé en carbone allotrope présente une conductivité thermique élevée, notamment par rapport à celle de la lèvre réalisée en métal (tel que l'aluminium ou le titane). Ce revêtement en carbone allotrope permet donc d'améliorer les transferts thermiques aussi bien conductifs que radiatifs de la cavité de la lèvre vers les parois de la lèvre, et notamment de la cavité vers les parois d'un panneau annulaire acoustique lorsqu'il est disposé sur la paroi interne pour réchauffer par radiation la zone de la lèvre sous ce panneau acoustique. En effet, la chaleur provenant de la cavité de la lèvre se propage à travers le revêtement en carbone allotrope et la ou les parois de la lèvre, de façon à renforcer une absorption quasi-totale de cette chaleur pour réchauffer la ou les parois correspondantes. Par conséquent, la présence ou la formation de givre (ou de glace) sur les parois de la lèvre (et de manière générale sur la lèvre d'entrée d'air d'une nacelle) est évitée.

Par ailleurs, l'amélioration de la conduction thermique de la lèvre permet également de réduire l'énergie nécessaire pour le dégivrage ou l'antigivrage. En particulier, lorsque l'énergie est prélevée de la turbomachine pour alimenter la lèvre d'entrée d'air chaud afin de dégivrer (ou d'empêcher la formation de givre) les parois de la lèvre d'entrée d'air. De plus, la lèvre d'entrée selon la configuration de l'invention permet de limiter (voire supprimer) le rejet d'air chaud (qui est requis pour dégivrer la surface externe de la paroi interne de la lèvre, notamment la zone de la paroi interne en regard d'un panneau acoustique lorsque la lèvre en est équipé) dans une veine d'écoulement d'air d'une turbomachine. En effet, le flux d'air chaud rejeté hors de la lèvre est compensé par les transferts thermiques dans la ou les zones de la lèvre comportant le revêtement en carbone allotrope.

L'invention présente par conséquent l'avantage de reposer sur une conception simple, offrant une très grande fiabilité, et peu pénalisante en termes de coûts et d'encombrement.

La lèvre d'entrée d'air selon l'invention comprend au moins un revêtement de transfert thermique qui est situé sur une ou plusieurs portions d'une surface de la lèvre annulaire. La lèvre d'entrée d'air selon l'invention peut comprendre une ou plusieurs caractéristiques suivantes, prises isolément les unes des autres ou en combinaison les unes avec les autres :
- au moins une partie de la paroi annulaire externe et/ou de la paroi annulaire interne comprend ledit au moins un revêtement de transfert thermique ;
- la lèvre comprend en outre au moins un panneau annulaire acoustique qui est situé dans ladite cavité et qui s'étend autour de la paroi interne, cette paroi interne étant perforée et comportant des trous débouchant dans des cellules acoustiques du panneau acoustique ;
- le panneau acoustique comprend au moins une peau annulaire qui enveloppe les cellules acoustiques, dans lequel au moins une partie de ladite au moins une peau et/ou au moins une partie des cellules acoustiques comprenant ledit au moins un revêtement de transfert thermique ;
- la peau annulaire comprend une extrémité amont qui est fixée à au moins l'une des parois annulaires interne et amont ; au moins une partie de ladite extrémité amont et/ou au moins une partie dudit au moins l'une des parois annulaires interne et amont comprend ledit au moins un revêtement de transfert thermique ;
- les parois annulaires externe et interne de la lèvre sont également reliées entre elles par une paroi annulaire aval, et dans laquelle la peau annulaire comprend une extrémité aval qui est fixée à la paroi annulaire aval ; au moins une partie de cette paroi annulaire aval et/ou au moins une partie de l'extrémité aval comprenant ledit revêtement de transfert thermique ;
- la lèvre comprend au moins une première zone en regard du panneau acoustique et/ou au moins des seconde et troisième zones adjacentes au panneau acoustique, dans laquelle ledit au moins un revêtement annulaire de transfert thermique recouvre au moins une desdites zones ;
- le panneau acoustique est réalisé dans un alliage métallique, en composite ou en thermoplastique ;
- le matériau en carbone allotrope est du graphène ;
- ledit au moins un revêtement de transfert thermique présente une épaisseur inférieure à 40µm, par exemple l'épaisseur est comprise entre1,0µm et 40µm ;
- la lèvre comprend un dispositif de dégivrage qui est de type pneumatique ou électrique et qui est au moins en partie logé dans ladite cavité ;
- le dispositif de dégivrage pneumatique est configurée pour émettre un flux d'air chaud, ladite paroi annulaire interne comportant des orifices traversant qui sont répartis autour dudit axe X et qui sont configurés pour laisser passer ledit flux d'air chaud à l'extérieur de ladite cavité ;
   -- ledit au moins un revêtement de transfert thermique est annulaire,
   -- ledit au moins un revêtement de transfert thermique est formé de plusieurs secteurs raccordés circonférentiellement (par rapport à l'axe X) bout à bout,
   -- ledit au moins un revêtement de transfert thermique recouvre la totalité ou au moins une partie d'une surface externe et/ou d'une surface interne de la paroi annulaire interne de la lèvre,
   -- ledit au moins un revêtement de transfert thermique recouvre la totalité ou au moins une partie d'une surface externe et/ou d'une surface interne de la paroi annulaire externe de la lèvre,
   -- ledit au moins un revêtement de transfert thermique recouvre la totalité ou au moins une partie d'une surface amont et/ou d'une surface aval de la paroi annulaire amont de la lèvre,
   -- ledit au moins un revêtement de transfert thermique recouvre la totalité ou au moins une partie d'une surface amont et/ou d'une surface aval de la paroi annulaire aval de la lèvre,
   -- ledit au moins un revêtement de transfert thermique recouvre la totalité ou au moins une partie d'une surface externe et/ou d'une surface interne de ladite au moins une peau annulaire du panneau acoustique,
   -- la totalité ou au moins une partie des cellules acoustiques est revêtue dudit au moins un revêtement de transfert thermique,
- le graphène présente une conductivité thermique allant jusqu'à 5000 W.m⁻¹.K⁻¹, par exemple la conductivité thermique est comprise entre 800 et 5000 W.m⁻¹.K⁻¹**.**

L'invention concerne aussi une manche d'entrée d'air pour une nacelle d'un ensemble propulsif d'aéronef, cette manche comportant une lèvre annulaire d'entrée d'air telle que décrite ci-dessus.

L'invention concerne encore un ensemble propulsif, en particulier d'un aéronef, comportant une nacelle équipée d'une lèvre d'entrée d'air telle que décrite ci-dessus ou d'une manche d'entrée d'air lèvre telle que décrite ci-dessus.

La présente invention concerne également un aéronef comprenant un fuselage, au moins une aile de sustentation et au moins un ensemble propulsif fixé au fuselage ou monté sous l'aile de sustentation.

L'ensemble propulsif comporte une nacelle équipée d'une lèvre d'entrée d'air telle que décrite ci-dessus ou d'une manche d'entrée d'air telle que décrite ci-dessus.

La présente invention concerne également un procédé de fabrication d'une lèvre d'entrée d'air selon l'une des particularités de l'invention, telle que définie dans les revendications 1 à 14. Le procédé comprend les étapes consistant à :
- réaliser une lèvre annulaire formée de tout ou partie d'au moins une des parois annulaires externe, interne et amont,
- appliquer au moins un revêtement de transfert thermique dans la lèvre.

Le procédé selon l'invention peut comprendre une ou plusieurs caractéristiques suivantes, prises isolément les unes des autres ou en combinaison les unes avec les autres :
- ledit revêtement de transfert thermique peut être appliqué par colmatage d'anodisation, par traitement de surface (par exemple dans un bain), par collage, par pistolet ou par application de revêtement dopé ;
- le procédé selon l'invention comprend en outre les étapes consistant à :
   - réaliser au moins un panneau acoustique comprenant des cellules acoustiques,
   - assembler ledit au moins un panneau acoustique avec la lèvre annulaire formée, de façon à ce que les cellules acoustiques débouchent dans des trous perforés de la paroi annulaire interne de la lèvre ;

   -- le procédé comprend une application dudit revêtement de transfert thermique sur la totalité ou au moins une partie d'au moins une des parois annulaires de la lèvre ;
   -- le procédé comprend une application dudit revêtement de transfert thermique sur au moins une partie des cellules acoustiques et/ou sur au moins une partie d'au moins une peau annulaire qui enveloppe lesdites cellules acoustiques ;
- le revêtement de transfert thermique recouvre une ou plusieurs pièces de la cavité de manière à réchauffer la/les zone(s) soumise(s) au givre qui sont isolées de la source de chaleur.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
La figure 1 est une vue schématique en coupe axiale d'un ensemble propulsif d'aéronef,
La figure 2 représente schématiquement une demi vue partielle en perspective d'une lèvre d'entrée d'air de l'art antérieur, et une vue schématique agrandie au niveau d'un panneau acoustique de la lèvre d'entrée,
La figure 3 représente schématiquement une vue agrandie d'un rejet d'un flux d'air chaud hors de la lèvre d'entrée d'air de la figure 2,
La figure 4 est une vue schématique partielle en perspective d'une lèvre d'entrée d'air selon un premier mode de l'invention, et une vue agrandie schématique d'une paroi interne de la lèvre d'entrée,
La figure 5 est une vue schématique partielle en perspective d'une lèvre d'entrée d'air selon un second mode de l'invention, comportant un panneau acoustique, et une vue agrandie schématique d'une partie du panneau acoustique.

Les éléments ayant les mêmes fonctions dans les différentes mises en œuvre ont les mêmes références dans les figures.

### Description détaillée de l'invention

Par convention, dans la description ci-après, les termes « longitudinal » et « axial » qualifient l'orientation d'éléments structurels s'étendant selon la direction d'un axe longitudinal, tel qu'un axe longitudinal du moteur d'une turbomachine d'un ensemble propulsif d'aéronef. Les termes « radial » ou « vertical » qualifient une orientation d'éléments structurels s'étendant selon une direction perpendiculaire à l'axe longitudinal. Les termes « intérieur » et « extérieur », et « interne » et « externe » sont utilisés en référence à un positionnement par rapport à l'axe longitudinal. Ainsi, un élément structurel s'étendant selon l'axe longitudinal comporte une surface intérieure tournée vers l'axe longitudinal et une surface extérieure, opposée à sa surface intérieure. De même, les termes « amont » et « aval » sont définis par rapport au sens de circulation de l'air dans la turbomachine.

Les figures 1 et 2 ont été décrites dans ce qui précède.

L'invention s'applique à un ensemble propulsif, en particulier d'aéronef, tel qu'illustré sur la figure 1.

Tel que décrit ci-dessus, l'ensemble propulsif 1 comprend un moteur ou une turbomachine 2 qui est entouré(e) par une nacelle 3.

Cet ensemble propulsif 1 peut être fixé sur un fuselage d'un aéronef ou monté sous une aile de sustentation de l'aéronef (non illustré sur les figures).

La turbomachine 2 peut être un turboréacteur à double flux, tel qu'illustré sur la figure 1. La turbomachine 2 s'étend suivant un axe longitudinal X' et comprend, de l'amont vers l'aval selon la direction d'écoulement des gaz, une soufflante 32, un compresseur basse pression (BP) 2a, un compresseur haute pression (HP) 2b, une chambre annulaire de combustion 2c, une turbine haute pression (HP) 2d et une turbine basse pression (BP) 2e, qui définissent une veine d'écoulement d'un flux primaire de gaz F1.

Le rotor de la turbine HP 2d est solidaire du rotor du compresseur HP 2b de manière à former un corps haute pression, tandis que le rotor de la turbine BP 2e est solidaire du rotor du compresseur BP 2a de manière à former un corps basse pression. Le rotor de chaque turbine entraîne en rotation le rotor du compresseur associé autour de l'axe X' sous l'effet de la poussée des gaz provenant de la chambre de combustion 2c.

La nacelle 3 de l'ensemble propulsif 1 comprend, de l'amont vers l'aval, une manche d'entrée d'air 4, une structure médiane 34 et une structure aval 36 reliées entre elles de manière à s'étendre autour de la turbomachine 2 et définir autour de celle-ci une veine annulaire 38 d'écoulement d'un flux d'entrée F. Après passage du flux d'entrée F dans la soufflante 32, il se divise en flux primaire F1 et flux secondaire F2 dans la turbomachine 2.

La manche d'entrée d'air 4 peut comprendre une lèvre annulaire 40 d'entrée d'air et un corps annulaire 30 disposé en aval de la lèvre 40. La lèvre 40 et le corps 30 s'étendent suivant un axe de révolution X confondu avec l'axe X' de la turbomachine 2.

Sur l'exemple, la lèvre 40 et le corps 30 sont formés d'une seule pièce. En variante, la lèvre 40 et le corps 30 peuvent être formés de deux pièces distinctes avec la lèvre 40 accolée ou fixée au corps 30.

La lèvre 40 est adaptée pour permettre la captation optimale de l'air nécessaire à l'alimentation la soufflante 32 de la turbomachine 2. Cet air se divise ensuite pour former les flux primaire F1 et secondaire F2 précités. La lèvre 40 permet de former un bord d'attaque de la manche d'entrée d'air 4 et définit une entrée transversale de la nacelle 3 permettant à l'air de rentrer dans la nacelle. Cette entrée transversale se poursuit dans la veine 38. Cette lèvre 40 comporte deux parois annulaires, respectivement interne 44 et externe 42. Ces parois 42, 44 sont notamment coaxiales par rapport à l'axe X.

La paroi interne 44 définit une partie d'une surface annulaire interne 44b de la lèvre d'entrée d'air 40 permettant de capter les flux d'air et de les guider vers la soufflante 32. La paroi interne 44 peut ainsi faire partie de la veine annulaire 38 de la nacelle. La paroi externe 42 définit en revanche une partie d'une surface annulaire externe 42a de la lèvre d'entrée d'air 40.

La lèvre 40 comprend également une paroi annulaire amont 46 qui relie les parois interne 44 et externe 42 entre elles. Sur les exemples, la paroi amont 46 présente une forme d'ogive. Les parois interne, externe et amont peuvent être formées d'une seule et même pièce (c'est-à-dire venue de matière). Les parois interne 44, externe 42 et amont 46 délimitent entre elles une cavité annulaire 400.

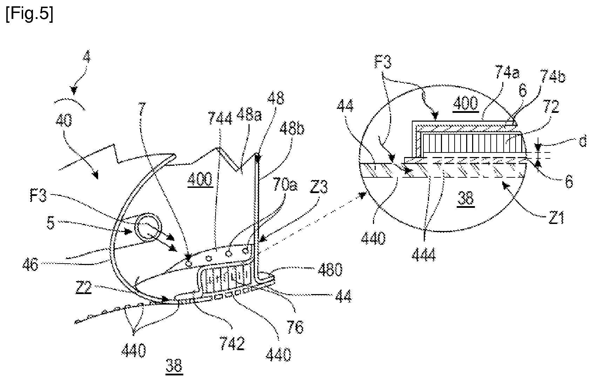

En aval de la lèvre 40, les parois interne 44 et externe 42 peuvent être reliées entre elles par une paroi annulaire aval 48 qui est notamment opposée à la paroi annulaire amont 46. Dans cette configuration, la cavité 400 s'étend axialement entre la paroi amont 46 et la paroi aval 48. Sur l'exemple de la figure 5, une extrémité radialement interne de la paroi aval 48 comprend une bride 480 de fixation. Cette bride 480 peut être reliée à la paroi interne 44. Telle qu'illustrée sur la figure 5, la bride 480 et la paroi aval 48 sont formées d'une seule et même pièce.

De manière générale, les parois annulaires 42, 44, 46, 48 de la lèvre 40 peuvent chacune être réalisée en métal, en alliage ou en composite.

Telle que décrite dans l'arrière-plan technique de la présente demande, la lèvre d'entrée 40 peut comprendre au moins un dispositif de dégivrage 5 (ou antigivrage) qui délivre un flux d'air chaud F3 permettant de réchauffer la ou les parois de la lèvre d'entrée 40 pour dégivrer la ou les parois correspondantes. Ce dispositif de dégivrage 5 peut être de type pneumatique ou électrique. Au moins une partie du dispositif de dégivrage 5, notamment un tube circulaire 50 du dispositif de dégivrage pneumatique en référence à la figure 5, peut être située dans la cavité 400 de la lèvre (figure 5) ou dans un autre compartiment de la nacelle 3 (figure 4).

Des orifices traversant 440, formant par exemple une rangée annulaire d'orifices traversant, peuvent être répartis sur un pourtour annulaire de la paroi interne 44 (figure 5). Dans l'état de la technique antérieur, en particulier en référence au dégivrage « transpirant », ces orifices traversant permettaient de faire passer le flux d'air chaud F3 hors de la lèvre 40 pour réchauffer la surface interne 44b de la paroi interne 44 qui n'était pas correctement dégivrée.

La lèvre 40, notamment la cavité 400, peut comporter en outre au moins un panneau acoustique 7, tel qu'illustré sur la figure 5. Le panneau acoustique 7 peut être annulaire ou peut comporter plusieurs secteurs raccordés circonférentiellement bout à bout par rapport à l'axe X. Le panneau acoustique 7 comprend des cellules acoustiques 72. Ces cellules acoustiques 72 peuvent être en forme de nid d'abeille.

Sur l'exemple de la figure 5, les cellules acoustiques 72 s'étendent autour de la paroi interne 44 de la lèvre. Dans ce cas, la paroi interne 44 peut comprendre des trous 444 débouchant dans les cellules acoustiques 72. Ce panneau acoustique 7 avec les cellules acoustiques 72, dites ouvertes, peut former un dispositif du type résonateur de Helmholtz qui contribue à fortement réduire les émissions acoustiques.

En référence à la figure 5, le panneau acoustique 7 comprend une peau annulaire 74 qui enveloppe les cellules acoustiques 72. Cette peau 74 s'étend radialement vers l'extérieur (par rapport à l'axe X). La peau 74 permet de former une paroi étanche autour des cellules acoustiques 72. En référence à la figure 2 ou 5, une extrémité amont 742 de la peau annulaire 74 peut être reliée à la paroi interne 44, notamment par des fixations 70b. Une extrémité aval 744 de la peau annulaire 74 peut être reliée à la paroi interne 44 (figure 2) ou à la paroi aval 48 (figure 5), notamment par des fixations 70a, 70c.

En variante non illustrée sur les figures, les cellules acoustiques 72 peuvent s'étendre autour d'une autre peau annulaire, dite interne, qui est perforée ou poreuse. Cette peau interne s'étend autour de la paroi interne 44 de la lèvre.

Le panneau acoustique 7, notamment les cellules acoustiques 72, peut être espacé de la paroi interne 44 par une distance d (figures 2 et 5), de façon à ce que les cellules acoustiques 72 ne soient pas en contact avec la paroi interne 44 tout en garantissant une fonction d'atténuation acoustique. A titre d'exemple, la distance d est inférieure à 3,00mm.

De manière générale, le panneau acoustique 7 (à savoir les cellules acoustiques 72 et/ou la peau annulaire 74) peut être réalisé dans un matériau en métal, en alliage de métal, en composite ou en thermoplastique.

Telle que décrite dans l'arrière-plan technique de la présente demande, la mise en place du panneau acoustique 7 dans la cavité 400 de la lèvre isole certaine zone de paroi de la lèvre. En particulier, une première zone Z1 de paroi de la lèvre qui est en regard du panneau acoustique 7 (telle qu'illustrée sur la figure 5). Cette zone Z1 n'est pas réchauffée par le flux d'air chaud F3, ce qui peut présenter un risque d'accumulation de givre plus importante.

L'une des particularités de l'invention réside dans le fait qu'au moins une partie de la lèvre 40 comprend au moins un revêtement de transfert thermique 6. Ce revêtement 6 comprend un matériau en carbone allotrope. Ceci permet d'améliorer la conduction thermique de la lèvre pour réchauffer efficacement la ou les parois de la lèvre et/ou empêcher la formation de givre sur ces parois.

Le revêtement de transfert thermique 6 peut comprendre une conductivité thermique maximale jusqu'à environ 5000 W.m⁻¹.K⁻¹**.** Par exemple, le revêtement 6 est réalisé en graphène. Le graphène présente une conductivité thermique allant jusqu'à 5000 W.m⁻¹.K⁻¹**.** Le graphène peut avoir une conductivité thermique comprise entre 800 et 5000 W.m⁻¹.K⁻¹**.** De préférence, la conductivité thermique du revêtement de transfert thermique 6 est supérieure à la conductivité thermique du panneau acoustique 7 ou de celle des parois 42, 44, 46, 48 de la lèvre 40. Par exemple, le panneau acoustique 7 peut être réalisé en aluminium ou en titane. La conductivité thermique de l'aluminium est d'environ 125 W.m⁻¹.K⁻¹, et celle du titane est d'environ 7.3 W.m⁻¹.K⁻¹**.**

Le revêtement 6 en carbone allotrope peut être de forme annulaire ou peut être formé de plusieurs secteurs raccordés circonférentiellement (par rapport à l'axe X) bout à bout. En effet, le revêtement 6 peut être appliqué sur la lèvre présentant une forme annulaire ou en secteurs. Le revêtement 6 peut être appliqué sur des éclisses de raccordement des secteurs de la pièce à revêtir.

Le revêtement de transfert thermique 6 peut présenter une épaisseur minimale. Cette épaisseur est mesurée radialement par rapport à l'axe X. L'épaisseur du revêtement 6 peut être inférieure à 10µm lorsque le carbone allotrope est appliqué par colmatage. L'épaisseur du revêtement 6 peut être inférieure à 40µm lorsque le carbone est inséré dans un revêtement organique (tel qu'une peinture). L'épaisseur du revêtement 6 peut être inférieure ou égale à quelques nanomètres lorsque celui-ci est appliqué seul en surface. Avantageusement, l'épaisseur du revêtement 6 est comprise entre 1,0µm et 40µm.

Le revêtement de transfert thermique 6 peut être appliqué sur une surface complète de la lèvre ou sur au moins une ou plusieurs portion(s) de surface localisée(s) de la lèvre. Le revêtement de transfert thermique 6 peut recouvrir directement la ou les portions de surfaces de la lèvre (par exemple nécessitant d'être réchauffé par le flux d'air chaud F3). Par exemple, le revêtement 6 peut présenter une surface minimale d'environ 100cm².

Avantageusement, le revêtement de transfert thermique 6 peut recouvrir une ou plusieurs pièces de la cavité pour venir réchauffer la zone qui ne voit pas la convection d'air chaud.

Avantageusement, le revêtement 6 peut recouvrir la totalité ou au moins une partie des parois de la lèvre nécessitant d'être réchauffée contre le givre, tel que la paroi interne 44, la paroi externe 42, la paroi amont 46 et/ou la paroi aval 48. La bride 480 de la paroi aval 48 peut comprendre le revêtement 6 en carbone allotrope.

Le revêtement 6 peut recouvrir la totalité ou au moins une partie de la peau 74 et/ou des cellules acoustiques 72 du panneau acoustique 7.

On entend par « totalité de la surface », une couverture (ou une proportion) du revêtement en carbone allotrope à 100% par rapport à la surface totale de la pièce à revêtir. En particulier, cette surface totale correspond à au moins une des surfaces interne, externe, amont et aval d'au moins une ou plusieurs des parois 42, 44, 46, 48 de la lèvre et/ou du panneau acoustique 7.

On entend par « une partie de la surface », une couverture du revêtement en carbone allotrope comprise entre 10 et 90% de la surface totale de la pièce à revêtir. De préférence, cette couverture est entre 30 et 70% de la surface totale. En particulier, cette surface totale correspond à au moins une des surfaces interne, externe, amont et aval d'au moins une ou plusieurs des parois de la lèvre et/ou du panneau acoustique.

De manière générale, les dimensions (à savoir la forme, l'épaisseur, la surface, la proportion, etc.) du revêtement de transfert thermique en carbone allotrope peuvent varier en fonction de sa localisation dans la lèvre, la disposition des éléments dans la lèvre et les dimensions de la lèvre et de la nacelle.

De manière générale, une ou plusieurs couches du revêtement 6 en carbone allotrope peut recouvrir une pièce ou une combinaison d'au moins deux pièces qui sont choisies parmi : la paroi interne 44, la paroi externe 42, la paroi amont 46, la paroi aval 48, la bride 480, la peau 74 et les cellules acoustiques 72.

Toutes les configurations possibles de recouvrement des éléments de la lèvre 40 par le revêtement de transfert thermique 6, ne sont pas illustrées sur les figures et la présente demande ne se limite pas aux modes de réalisation illustrés par les figures 4 et 5.

Nous allons maintenant décrire de façon non limitative, l'agencement du revêtement 6 de transfert thermique en carbone allotrope dans la lèvre 40 en référence aux figures 4 et 5.

La figure 4 illustre un premier mode de réalisation de la lèvre d'entrée 40 de l'invention, comportant la lèvre 40 telle que décrite ci-dessus (avec les parois interne 44, externe 42 et amont 46 délimitant la cavité 400) et un revêtement de transfert thermique 6 en carbone allotrope décrit ci-dessus. Dans cet exemple et de façon non-limitative, le revêtement 6 en carbone allotrope recouvre une surface externe 44a de la paroi interne 44. La surface externe 44a fait partie de la cavité 400 de la lèvre. En variante, le revêtement 6 recouvre la surface interne 44b opposée à la surface externe 44a. Cette surface interne 44b s'étend dans la veine 38 de la nacelle 3. Dans l'exemple de la figure 4, le flux d'air chaud F3 (par exemple délivré par le dispositif de dégivrage 5) est absorbé par le revêtement de transfert thermique 6 et diffusé dans la paroi interne 44 pour la réchauffer. Dans cette configuration, la quasi-totalité du flux d'air chaud F3 est diffusée dans le revêtement 6 et la paroi interne 44. Ainsi, aucune ou très peu de quantité du flux d'air chaud F3 s'échappe hors de la lèvre 40, dans la veine 38. S'il y a eu lieu, la faible quantité du flux d'air chaud F3 entrant dans la veine 38, ne perturbe pas l'écoulement d'un flux d'air froid dans la turbomachine.

En variante non illustrée sur les figures, le revêtement 6 en carbone allotrope peut recouvrir la totalité ou au moins une partie d'une surface amont 46a et/ou d'une surface aval 46b de la paroi amont 46. La surface aval 46b s'étend dans la cavité 400 et la surface amont 46a est à l'opposé de la surface aval 46a.

Dans une autre variante non illustrée sur les figures, le revêtement 6 en carbone allotrope peut couvrir la totalité ou au moins une partie de la surface externe 42a et/ou d'une surface interne 42b de la paroi externe 42. La surface interne 42b s'étend dans la cavité 400, et la surface externe 42a est à l'opposé de la surface interne 42b.

Dans une autre variante, le revêtement 6 en carbone allotrope peut recouvrir la totalité ou au moins une partie d'une surface amont 48a et/ou d'une surface aval 48b de la paroi aval 48. La surface amont 48a s'étend dans la cavité 400 et la surface aval 48b est à l'opposé de la surface amont 48a. Une partie ou la totalité de la bride 480 de la paroi aval 48 peut être recouverte par le revêtement 6.

L'application du revêtement 6 sur au moins une des parois 42, 44, 46, 48 de la lèvre de la figure 5, permet d'augmenter le transfert pour le dégivrage. Ce qui fait diminuer le besoin en apport énergétique pour le dégivrage et également de faire diminuer le prélèvement nécessaire au niveau du moteur de la turbomachine.

La figure 5 illustre un second mode de réalisation de la lèvre 40 telle que décrite ci-dessus (avec les parois interne 44, externe 42, amont 46 et aval 48 délimitant entre elles la cavité 400), le panneau acoustique 7 décrit ci-dessus et un revêtement de transfert thermique 6 en carbone allotrope décrit ci-dessus. Dans cet exemple et de façon non-limitative, une partie de la surface externe 44a de la paroi interne 44 et la totalité d'une surface interne 74b de la peau 74 sont recouvertes par le revêtement 6 en carbone allotrope. La surface interne 74b s'étend en direction des cellules acoustiques 72. En variante non-illustrée sur la figure 5, le revêtement 6 recouvre une surface externe 74a opposée à la surface externe 74a et/ou la surface interne 44b de la paroi interne 44 qui est en regard du panneau acoustique 7. Cette surface externe 74a s'étend en direction de la cavité 400 de la lèvre.

En particulier, l'extrémité amont 742 et/ou l'extrémité aval 744 de la peau 74 comprend le revêtement 6.

Dans l'exemple de la figure 5, le flux d'air chaud F3 (par exemple délivré par le dispositif de dégivrage 5) est, d'une part, absorbé par le revêtement 6 et diffusé dans la paroi interne 44 et dans la peau 74, et d'autre part, absorbé directement par la peau 74. Ceci permet de réchauffer la zone de paroi Z1. Dans cette configuration, la quasi-totalité du flux d'air chaud F3 est diffusée dans le revêtement 6, la peau 74 du panneau acoustique 7 et la paroi interne 44 de la lèvre. Ainsi, aucune ou très peu de quantité du flux d'air chaud F3 s'échappe hors de la lèvre 40. Le flux d'air chaud F3 pouvant passer à travers les orifices 440 (dans le cas où la paroi interne 44 en est équipée) dans la veine 38, est suffisamment faible pour qu'il ne perturbe pas l'écoulement du flux d'air dans la turbomachine.

En variante non illustrée sur la figure 5, le revêtement 6 en carbone allotrope peut recouvrir une seconde zone Z2 et/ou une troisième zone Z3 qui sont adjacentes au panneau acoustique 7. La seconde zone Z2 peut être située sur une partie de la paroi interne 44 qui est accolée au panneau acoustique 7. La troisième zone Z3 peut être située sur une partie de la paroi aval 48 qui est accolée au panneau acoustique 7. Le revêtement 6 peut recouvrir la surface interne et/ou la surface externe de la seconde zone Z2 et/ou de la troisième zone Z3. Le revêtement 6 peut recouvrir aussi bien la surface amont 48a que la surface aval 48b de la paroi aval 48 de la troisième zone Z3.

La lèvre d'entrée d'air 40 selon l'invention est particulièrement avantageuse en termes de procédé de fabrication. Un tel procédé de fabrication de la lèvre d'entrée 40 comprend les étapes consistant à :
- réaliser la lèvre annulaire 40 qui est formée de tout ou partie d'au moins une des parois annulaires externe 42, interne 44 et amont 46,
- appliquer au moins un revêtement de transfert thermique 6 dans la lèvre 40.

Le revêtement 6 peut être appliqué sur la totalité ou au moins une partie d'au moins une des parois 42, 44, 46, 48 de la lèvre.

Lorsque la lèvre 40 à réaliser doit être équipée d'un panneau acoustique 7, le procédé de fabrication peut comprendre également les étapes consistant à :
- réaliser en outre au moins un panneau acoustique 7 comportant des cellules acoustiques 72,
- assembler le panneau acoustique 7 avec la lèvre 40 formée, de façon à ce que les cellules acoustiques 72 débouchent dans des trous 444 perforés de la paroi interne 44 de la lèvre 40.

L'application du revêtement 6 peut être réalisée sur la totalité ou sur au moins une partie de la peau annulaire 74 et/ou sur au moins une partie des cellules acoustiques 72.

Le revêtement de transfert thermique 6 peut être appliqué dans la lèvre 40 par différentes techniques de revêtement de surface, telles que par :
- un colmatage par une anodisation de la pièce à revêtir avec du carbone allotrope,
- un traitement par immersion ou trempage de la pièce à revêtir dans un bain comportant du carbone allotrope,
- un traitement de surface de la pièce à revêtir dans un bain comportant du carbone allotrope,
- un collage,
- une application du carbone allotrope directement ou à travers une peinture par un pistolet sur la pièce à revêtir, ou
- une application du revêtement dopé (ou chargé en carbone allotrope) sur la pièce à revêtir.

On entend par « pièce à revêtir », une pièce ou une combinaison d'au moins deux pièces qui sont choisies parmi : la paroi interne 44, la paroi externe 42, la paroi amont 46, la paroi aval 48, la peau 74 et les cellules acoustiques 72.

Par ailleurs, du carbone allotrope (tel que le graphène) peut être intégré directement au matériau de réalisation de la pièce à revêtir, en particulier lorsque la pièce à revêtir est réalisée en composite ou en thermoplastique. Le revêtement de transfert thermique 6 selon l'invention peut être appliqué en supplément sur cette pièce.

## Revendications

1. Lèvre annulaire (40) d'entrée d'air pour une nacelle (3) d'un ensemble propulsif (1) d'aéronef, la lèvre (40) s'étend autour d'un axe de révolution (X) et qui comporte :
- une paroi annulaire externe (42),
- une paroi annulaire interne (44),
- une paroi annulaire amont (46) reliant lesdites parois annulaires externe et interne (42, 44) de manière à délimiter entre elles une cavité annulaire (400),
au moins une partie de la lèvre annulaire (40) comprenant au moins un revêtement de transfert thermique (6) qui comprend un matériau en carbone allotrope, le matériau en carbone allotrope étant du graphène,
l'au moins un revêtement de transfert thermique (6) étant situé sur une ou plusieurs portions d'une surface de la lèvre annulaire (40),
**caractérisé en ce que** le revêtement de transfert thermique (6) recouvre une ou plusieurs pièces de la cavité annulaire (400), de manière à réchauffer la ou les zones soumises au givre qui sont isolées d'une source de chaleur.

2. Lèvre d'entrée d'air selon la revendication 1, **caractérisée en ce qu'**au moins une partie de la paroi annulaire externe (42) et/ou de la paroi annulaire interne (44) comprend ledit au moins un revêtement de transfert thermique (6).

3. Lèvre d'entrée d'air selon la revendication 1 ou 2, **caractérisée en ce que** la lèvre (40) comprend en outre au moins un panneau annulaire acoustique (7) qui est situé dans ladite cavité (400) et qui s'étend autour de la paroi interne (44), cette paroi interne (44) étant perforée et comportant des trous (444) débouchant dans des cellules acoustiques (72) du panneau acoustique (7).

4. Lèvre d'entrée d'air selon la revendication 3, **caractérisée en ce que** le panneau acoustique (7) comprend au moins une peau annulaire (74) qui enveloppe les cellules acoustiques (72), dans lequel au moins une partie de ladite au moins une peau annulaire (74) et/ou au moins une partie des cellules acoustiques (72) comprenant ledit au moins un revêtement de transfert thermique (6).

5. Lèvre d'entrée d'air selon la revendication 4, **caractérisée en ce que** la peau annulaire (74) comprend une extrémité amont (742) qui est fixée à au moins l'une des parois annulaires interne et amont (44, 46) ; au moins une partie de ladite extrémité amont (742) et/ou au moins une partie dudit au moins l'une des parois annulaires interne et amont (44, 46) comprend ledit au moins un revêtement de transfert thermique (6).

6. Lèvre d'entrée d'air selon la revendication 4 ou 5, **caractérisée en ce que** les parois annulaires externe et interne (42, 44) de la lèvre (40) sont également reliées entre elles par une paroi annulaire aval (48), et dans laquelle la peau annulaire (74) comprend une extrémité aval (744) qui est fixée à la paroi annulaire aval (48) ; au moins une partie de cette paroi annulaire aval (48) et/ou au moins une partie de l'extrémité aval (744) comprenant ledit revêtement de transfert thermique.

7. Lèvre d'entrée d'air selon l'une quelconque des revendications 3 à 6, **caractérisée en ce que** la lèvre (40) comprend au moins une première zone (Z1) en regard du panneau acoustique (7) et/ou au moins des seconde et troisième zones (Z2, Z3) adjacentes au panneau acoustique (7), dans laquelle ledit au moins un revêtement annulaire de transfert thermique (6) recouvre au moins une desdites zones (Z1, Z2, Z3).

8. Lèvre d'entrée d'air selon l'une quelconque des 3 à 7, **caractérisée en ce que** le panneau acoustique (7) est réalisé dans un alliage métallique, en composite ou en thermoplastique.

9. Lèvre d'entrée d'air selon l'une quelconque des revendications précédentes, **caractérisée en ce que** le graphène présente une conductivité thermique allant jusqu'à 5000 W.m⁻¹.K⁻¹, par exemple la conductivité thermique est comprise entre 800 et 5000 W.m⁻¹.K⁻¹.

10. Lèvre d'entrée d'air selon l'une quelconque des revendications précédentes, **caractérisée en ce que** ledit au moins un revêtement de transfert thermique (6) présente une épaisseur inférieure à 40µm, par exemple l'épaisseur est comprise entre1,0µm et 40µm.

11. Lèvre d'entrée d'air selon l'une quelconque des revendications, **caractérisée en ce qu'**elle comprend un dispositif de dégivrage (5) qui est de type pneumatique ou électrique et qui est au moins en partie logé dans ladite cavité (400).

12. Lèvre d'entrée d'air selon la revendication 11, **caractérisée en ce que** le dispositif de dégivrage (5) pneumatique est configurée pour émettre un flux d'air chaud (F3), ladite paroi annulaire interne (44) comportant des orifices traversant (440) qui sont répartis autour dudit axe (X) et qui sont configurés pour laisser passer ledit flux d'air chaud (F3) à l'extérieur de ladite cavité (400).

13. Ensemble propulsif d'aéronef (1), comportant une nacelle (3) équipée d'une lèvre annulaire d'entrée d'air (40) selon l'une quelconque des revendications précédentes.

14. Procédé de fabrication d'une lèvre annulaire d'entrée d'air selon l'une des revendications 1 à 12, **caractérisé en ce que** le procédé comprend les étapes consistant à :
- réaliser une lèvre annulaire (40) formée de tout ou partie d'au moins une des parois annulaires externe, interne et amont (42, 44, 46),
- appliquer au moins un revêtement de transfert thermique (6) dans la lèvre (40).

15. Procédé de fabrication selon la revendication 14, **caractérisé en ce que** ledit revêtement de transfert thermique (6) est appliqué par colmatage d'anodisation, par traitement de surface, par collage, par pistolet ou par application de revêtement dopé.

## Patentansprüche

1. Kreisförmige Lufteinlasslippe (40) für eine Gondel (3) einer Antriebsanordnung (1) eines Flugzeugs, wobei sich die Lippe (40) um eine Drehachse (X) erstreckt und Folgendes umfasst:
- eine ringförmige Außenwand (42),
- eine ringförmige Innenwand (44),
- eine ringförmige stromaufwärts gelegene Wand (46), die die ringförmige Außenwand und die ringförmige Innenwand (42, 44) so verbindet, dass zwischen diesen ein ringförmiger Hohlraum (400) begrenzt wird,
wobei mindestens ein Teil der ringförmigen Lippe (40) mindestens eine Wärmeübertragungsverkleidung (6) umfasst, die ein allotropes Kohlenstoffmaterial umfasst, wobei das allotrope Kohlenstoffmaterial Graphen ist, wobei sich die mindestens eine Wärmeübertragungsverkleidung (6) an einem oder mehreren Abschnitten einer Oberfläche der ringförmigen Lippe (40) befindet,
**dadurch gekennzeichnet, dass** die Wärmeübertragungsverkleidung (6) ein oder mehrere Werkstücke des ringförmigen Hohlraums (400) derart bedeckt, dass der oder die dem Frost ausgesetzten Bereiche, die von einer Wärmequelle isoliert sind, erhitzt werden.

2. Lufteinlasslippe nach Anspruch 1, **dadurch gekennzeichnet, dass** mindestens ein Teil der ringförmigen Außenwand (42) und/oder der ringförmigen Innenwand (44) die mindestens eine Wärmeübertragungsverkleidung (6) umfasst.

3. Lufteinlasslippe nach Anspruch 1 oder 2, **dadurch gekennzeichnet, dass** die Lufteinlasslippe (40) weiter mindestens eine ringförmige Akustikplatte (7) umfasst, die sich im Hohlraum (400) befindet und die sich um die ringförmige Innenwand (44) erstreckt, wobei diese Innenwand (44) perforiert ist und Löcher (444) umfasst, die zu Akustikzellen (72) der Akustikplatte (7) führen.

4. Lufteinlasslippe nach Anspruch 3, **dadurch gekennzeichnet, dass** die Akustikplatte (7) mindestens eine ringförmige Haut (74) umfasst, die die Akustikzellen (72) umhüllt, wobei mindestens ein Teil der mindestens einen ringförmigen Haut (74) und/oder mindestens ein Teil der Akustikzellen (72) die mindestens eine Wärmeübertragungsverkleidung (6) umfasst.

5. Lufteinlasslippe nach Anspruch 4, **dadurch gekennzeichnet, dass** die ringförmige Haut (74) ein stromaufwärts gelegenes Ende (742) umfasst, das an der mindestens einen von der ringförmigen Innenwand und der ringförmigen stromaufwärts gelegenen Wand (44, 46) befestigt ist; wobei mindestens ein Teil des stromaufwärts gelegenen Endes (742) und/oder mindestens ein Teil der mindestens einen von der ringförmigen Innenwand und der ringförmigen stromaufwärts gelegenen Wand (44, 46) die mindestens eine Wärmeübertragungsverkleidung (6) umfasst.

6. Lufteinlasslippe nach Anspruch 4 oder 5, **dadurch gekennzeichnet, dass** die ringförmige Außenwand und die ringförmige Innenwand (42, 44) der Lippe (40) ebenfalls durch eine stromabwärts gelegene ringförmige Wand (48) miteinander verbunden sind, und wobei die ringförmige Haut (74) ein stromabwärts gelegenes Ende (744) umfasst, das an der stromabwärts gelegenen ringförmigen Wand (48) befestigt ist; wobei mindestens ein Teil dieser stromabwärts gelegenen Wand (48) und/oder mindestens ein Teil des stromabwärts gelegenen Endes (744) die Wärmeübertragungsverkleidung umfasst.

7. Lufteinlasslippe nach einem der Ansprüche 3 bis 6, **dadurch gekennzeichnet, dass** die Lippe (40) mindestens einen ersten Bereich (Z1), der der Akustikplatte (7) zugewandt ist, und/oder mindestens einen zweiten und einen dritten Bereich (Z2, Z3), die an die Akustikplatte (7) angrenzen, umfasst, wobei die mindestens eine ringförmige Wärmeübertragungsverkleidung (6) mindestens einen der Bereiche (Z1, Z2, Z3) bedeckt.

8. Lufteinlasslippe nach einem der Ansprüche 3 bis 7, **dadurch gekennzeichnet, dass** die Akustikplatte (7) aus einer Metalllegierung, einem Verbundwerkstoff oder aus einem Thermoplast besteht.

9. Lufteinlasslippe nach einem der vorstehenden Ansprüche, **dadurch gekennzeichnet, dass** das Graphen eine Wärmeleitfähigkeit aufweist, die bis zu 5000 W.m⁻¹.K⁻¹ beträgt, beispielsweise liegt die Wärmeleitfähigkeit zwischen 800 und 5000 W.m⁻¹.K⁻¹.

10. Lufteinlasslippe nach einem der vorstehenden Ansprüche, **dadurch gekennzeichnet, dass** die mindestens eine Wärmeübertragungsverkleidung (6) eine Dichte kleiner als 40µm aufweist, beispielsweise liegt die Dichte zwischen 1,0µm und 40µm.

11. Lufteinlasslippe nach einem der vorstehenden Ansprüche, **dadurch gekennzeichnet, dass** sie eine Enteisungsvorrichtung (5) umfasst, die vom pneumatischen oder elektrischen Typ ist und die mindestens teilweise im Hohlraum (400) aufgenommen ist.

12. Lufteinlasslippe nach Anspruch 11, **dadurch gekennzeichnet, dass** die pneumatische Enteisungsvorrichtung (5) so konfiguriert ist, dass sie einen Heißluftstrom (F3) abgibt, wobei die ringförmige Innenwand (44) Durchgangsöffnungen (440) umfasst, die um die Achse (X) herum verteilt sind und die konfiguriert sind, um den Heißluftstrom (F3) zur Außenseite des Hohlraums (400) hindurchströmen lassen.

13. Antriebseinheit eines Flugzeugs (1), die eine Gondel (3) umfasst, die mit einer ringförmigen Lufteinlasslippe (40) nach einem der vorstehenden Ansprüche ausgestattet ist.

14. Verfahren zur Fertigung einer ringförmigen Lufteinlasslippe nach einem der Ansprüche 1 bis 12, **dadurch gekennzeichnet, dass** das Verfahren die folgenden Schritte umfasst:
- Herstellen einer ringförmigen Lippe (40), die ganz oder teilweise aus mindestens einer von der ringförmigen Außen-, Innen- und stromaufwärts gelegenen Wand (42, 44, 46) gebildet ist, Auftragen mindestens einer Wärmeübertragungsverkleidung (6) in der Lippe (40).

15. Verfahren zur Fertigung nach Anspruch 14, **dadurch gekennzeichnet, dass** die Wärmeübertragungsverkleidung (6) durch eine Anodisierungsversiegelung aufgetragen wird, beispielsweise, durch eine Oberflächenbehandlung, durch Kleben, durch eine Spritzpistole oder durch Auftragen einer dotierten Verkleidung.

## Claims

1. An annular lip (40) of an air intake for a nacelle (3) of an aircraft propulsion assembly (1), the lip (40) extending around an axis of revolution (X) and comprising:
- an external annular wall (42),
- an internal annular wall (44),
- an upstream annular wall (46) connecting said external and internal annular walls (42, 44) so as to define an annular cavity (400) between them,
at least a portion of the annular lip (40) comprising at least one heat transfer coating (6) which comprises an allotropic carbon material, the allotropic carbon material being graphene,
the at least one heat transfer coating (6) being located on one or more portions of a surface of the annular lip (40),
**characterised in that** the heat transfer coating (6) covers one or more parts of the annular cavity (400) so as to heat the area or areas subject to frost which are isolated from a heat source.

2. The air intake lip as claimed in claim 1, **characterised in that** at least a portion of the external annular wall (42) and/or the internal annular wall (44) comprises said at least one heat transfer coating (6).

3. The air intake lip as claimed in claim 1 or 2, **characterised in that** the lip (40) further comprises at least one annular acoustic panel (7) which is located in said cavity (400) and which extends around the internal wall (44), this internal wall (44) being perforated and comprising holes (444) opening into acoustic cells (72) of the acoustic panel (7).

4. The air intake lip according to claim 3, **characterised in that** the acoustic panel (7) comprises at least one annular skin (74) which envelops the acoustic cells (72), wherein at least a portion of said at least one annular skin (74) and/or at least a portion of the acoustic cells (72) comprise said at least one heat transfer coating (6).

5. The air intake lip according to claim 4, **characterised in that** the annular skin (74) comprises an upstream end (742) which is attached to at least one of the internal and upstream annular walls (44, 46); at least a portion of said upstream end (742) and/or at least a portion of said at least one of the internal and upstream annular walls (44, 46) comprises said at least one heat transfer coating (6).

6. The air intake lip according to claim 4 or 5, **characterised in that** the external and internal annular walls (42, 44) of the lip (40) are also interconnected by a downstream annular wall (48), and wherein the annular skin (74) comprises a downstream end (744) which is attached to the downstream annular wall (48); at least a portion of this downstream annular wall (48) and/or at least a portion of the downstream end (744) comprising said heat transfer coating.

7. The air intake lip according to any one of claims 3 to 6, **characterised in that** the lip (40) comprises at least one first area (Z1) facing the acoustic panel (7) and/or at least second and third areas (Z2, Z3) adjacent to the acoustic panel (7), wherein said at least one annular heat transfer coating (6) covers at least one of said areas (Z1, Z2, Z3).

8. The air intake lip according to any one of 3 to 7, **characterised in that** the acoustic panel (7) is made of a metal alloy, composite or thermoplastic.

9. The air intake lip according to any one of the preceding claims, **characterised in that** the graphene has a thermal conductivity of up to 5000 W.m⁻¹.K⁻¹, for example the thermal conductivity is between 800 and 5000 W.m⁻¹.K⁻¹.

10. The air intake lip according to any one of the preceding claims, **characterised in that** said at least one heat transfer coating (6) has a thickness of less than 40µm, for example the thickness is between 1.0µm and 40µm.

11. The air intake lip according to any one of the claims, **characterised in that** it comprises a de-icing device (5) which is of the pneumatic or electric type and which is at least partly housed in said cavity (400).

12. The air intake lip according to claim 11, **characterised in that** the pneumatic de-icing device (5) is configured to emit a flow of hot air (F3), said internal annular wall (44) comprising through orifices (440) which are distributed around said axis (X) and which are configured to allow said flow of hot air (F3) to pass outside said cavity (400).

13. An aircraft propulsion assembly (1), comprising a nacelle (3) equipped with an annular lip of an air intake (40) according to any one of the preceding claims.

14. A method for manufacturing an annular lip of an air intake according to any of claims 1 to 12, **characterised in that** the method comprises the steps of:
- producing an annular lip (40) formed from all or part of at least one of the external, internal and upstream annular walls (42, 44, 46),
- applying at least one heat transfer coating (6) to the lip (40).

15. The manufacturing method according to claim 14, **characterised in that** said heat transfer coating (6) is applied by anodising sealing, surface treatment, bonding, spraying or applying a doped coating.
